# EUROPEAN PATENT SPECIFICATION

(11) **EP 2 251 121 B1**
(45) Date of publication and mention of the grant of the patent: **09.05.2012**
(21) Application number: 10162548.1
(22) Date of filing: 11.05.2010
(51) Int. Cl.: B23B 13/04, B23B 13/12

(54) **System of dynamic control in a bar feeder for an automatic lathe**
Dynamisches Steuersystem in einer Stangenzuführvorrichtung für Drehautomaten
Système de réglage dynamique dans un embarreur pour un tour automatique

(30) Priority: 13.05.2009 IT BO20090309
(43) Date of publication of application: 17.11.2010
(73) Proprietor: IEMCA Giuliani Macchine Italia S.p.A., 48018 Faenza (Ravenna) (IT)
(72) Inventor: Magnani, Claudio, 48100, MEZZANO RA (IT); Melandri, Pierantonio, 48018, FAENZA RA (IT); Moretti, Maurizio, 48013, BRISIGHELLA, Frazione FOGNANO RA (IT)
(74) Representative: Modiano, Micaela Nadia

(56) References cited:
- EP-A1- 0 600 783
- EP-A1- 1 316 374

## Description

The present invention refers to a system for dynamic control of the bar pusher in a bar feeder for an automatic lathe.

Bar feeders are known which comprise a guide in which the bars are made to advance individually towards the spindle of a lathe that is aligned with it.

The advancement of the bars is achieved by means of a bar pusher provided with a collet that grips the end of the bar and pushes the bar along the guide into the spindle. The bar pusher is engaged to a drive train which is actuated by a hydraulic motor which moves parallel with the guide. The bar pusher pushes the bar across the spindle until it comes up against a stroke limiter which is positioned in such a way as to establish the length of the piece that is to be processed by the lathe tools. After striking against the stroke limiter the bar is gripped by the collet of the spindle and the stroke limiter is taken away in order to allow the tools to carry out the processing of the piece. After such processing is finished the piece is cut to allow the advancement of a subsequent portion of bar.

The system currently used for advancing the bar has several drawbacks that are linked to the weight and diameter characteristics of the bar. In particular, if the bar has a large diameter and therefore is heavy, then damage to the stroke limit may result and the bar may bounce, owing to the impact against the stroke limit, with the result that the bar is gripped in the incorrect position by the collet of the spindle. At the other extreme, a bar with a small diameter may flex upon impact against the stroke limit. It is also necessary to keep in mind that advancement errors are difficult to detect which means that the pieces produced may be too long or too short at the end of processing and therefore susceptible of being discarded with the productive and economic consequences that derive from this.

EP 1 316 374 A1 discloses an automatic bar feeder for multispindle lathes comprising a running bar pusher powered by a hydraulic motor including a proportional flow rate valve driven by signals from a sensor unit that determines the position of an advancing bar.

The aim of the present invention is to provide a system for dynamic control of the bar pusher in a bar feeder for an automatic lathe which is capable of overcoming the above mentioned drawbacks.

This aim is achieved with a system the characteristics of which are defined in the claims.

Further characteristics and advantages of the invention will become better apparent from the detailed description which follows of a non-exclusive embodiment of the claimed system based on the accompanying drawings, wherein:

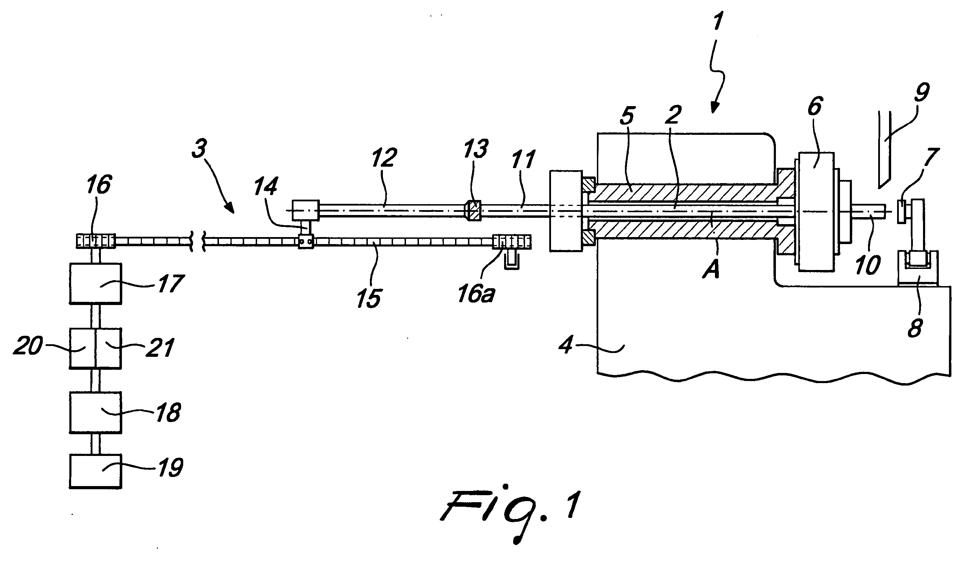

Figure 1 shows the schematic diagram of a bar feeder in a single-spindle lathe which is taken as an example to show how the system according to the invention works;

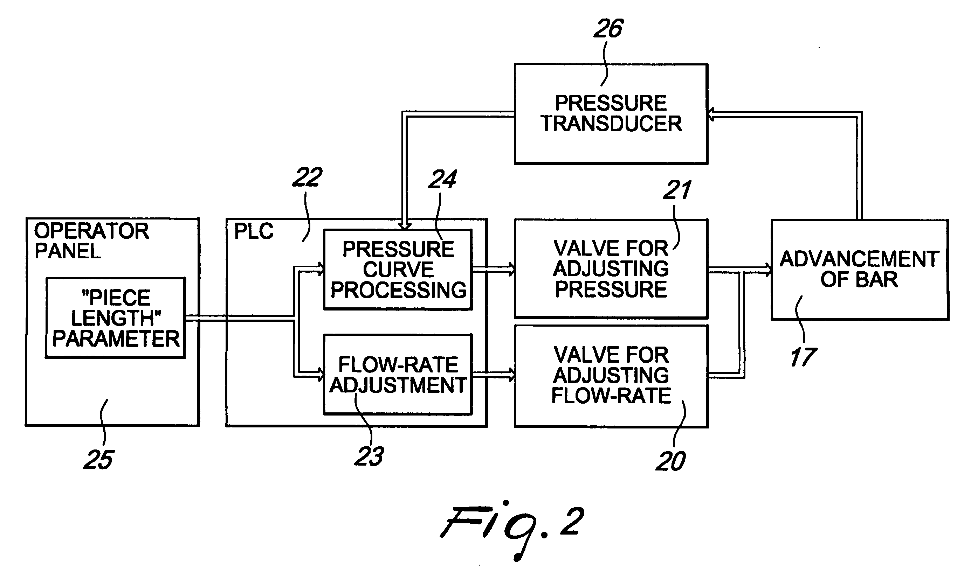

Figure 2 shows a block diagram of the system;
Figure 3 shows a diagram that represents three operative situations of the system according to the pressure that acts on the bar pusher;
Figures 4a-4e show a sequence of positions of the bar during the advancement path of the lathe and the progress in the speed at which the bar travels along this path;
Figure 5 shows a sequence of positions assumed by the bar during its progress when the stroke limit is close to the collet to obtain shorter pieces to be processed and the progress of the advancement speed of the bar compared with the progress when the piece to be obtained is longer.

With reference to the figures, the reference numeral 1 designates part of a lathe, shown schematically, for processing a bar 2 fed to the lathe 1 by a bar feeder associated with such lathe and indicated overall with 3. The lathe is assumed to be traditional in design, and only the part thereof that is addressed by the present invention is described below, in general terms, since this is easily understood to the technician skilled in the art.

The lathe 1 comprises a bed 4 on which a spindle 5 is supported, the spindle 5 being rotatable about an axis A and being provided with a collet 6 to grip the bar 2 to be processed. In front of the collet 6 there is a stroke limiter 7 mounted on a slide 8 that can be positioned in front of the collet 6 in such a way as to be able to move the stroke limiter 7 closer to or further away from the collet. The stroke limiter 7 is also articulated on the slide 8 about an axis that is parallel to the axis A and is moved by means (not shown) from a raised position that is exactly opposite the centre of the collet so as to operate as a strike plate for the bar 2 to a lowered position to give space to a tool 9 of the lathe and allow the processing of the portion 10 of bar that emerges from the front of the collet, and vice-versa. The means for moving the stroke limiter in a linear direction along the axis A and in an articulated manner about the axis A are not shown because they are normally already present in automatic lathes and therefore their construction is known.

A bar pusher 12 of the feeder, which slides in the bar's guide channel (not shown in the drawings) and is aligned with the axis A, acts on the portion 11 of the bar 2 that extends rearward from the spindle 5. The bar pusher 12 is provided at its front end with a collet 13 adapted to grip the rear portion 11 of the bar in such a way as to be capable of applying an axial thrust action on the bar or, when needed, extracting the bar from the spindle, or extracting a crop end of bar that is the final remnant of processing.

The bar pusher 12, by means of a coupling 14, is connected to a drive train 15 running around a pair of gear wheels 16, 16a and actuated by a hydraulic motor 17 that is parallel with the bar 2. The hydraulic motor 17 receives its pressure energy from a pump 18 actuated by an electric motor 19. Since in automatic lathes the opening time of the collet is kept constant irrespective of the length of the piece to be processed, controlling the advancement of the bar pusher 12 will be executed within the opening time, i.e. within the time interval taken by the front end of the bar, once it has been released by the collet 6 at the end of each processing, to strike against the stroke limiter 7 once again.

Between the hydraulic motor 17 and the pump 18 there is a valve 20 for adjusting the flow-rate and a valve 21 for adjusting the pressure which, according to the inventive concept of the present invention, are controlled in such a way as to optimise the speed of advancement of the bar pusher 12 into the lathe and consequently of the bar 2 taking account of the length of the front portion 10 to be processed, by which length the bar has to advance in order to avoid too violent an impact of the bar on the stroke limiter 7 which could cause bouncing, damage to the stroke limiter, and/or closing of the collet of the spindle at the incorrect time, as will become more apparent hereinafter.

To control the bar pusher there is a programmable logic controller (PLC) 22 comprising a moving element 23 and a processing element 24 which control the valves 20, 21. The valve 20 for adjusting the flow-rate is controlled by the moving element 23, and the valve 21 for adjusting the pressure, which, since it only performs the function of scaling downwards, can be compared to a pressure reducing valve, is controlled by the processing element 24. In addition the PLC 22 is associated with a device 25 that provides a parameter that indicates the length of the piece to be processed, which is previously established by an operator during the phase of tooling up the loader. More precisely, the device 25 acts on the flow-rate according to the length of the piece, in that it reduces the flow-rate for short pieces and increases it for long pieces.

The reference numeral 26 indicates a pressure transducer which is connected in feedback to the processing element 24 and which reads the maximum value of the pressure in the initial phase of advancement of the bar.

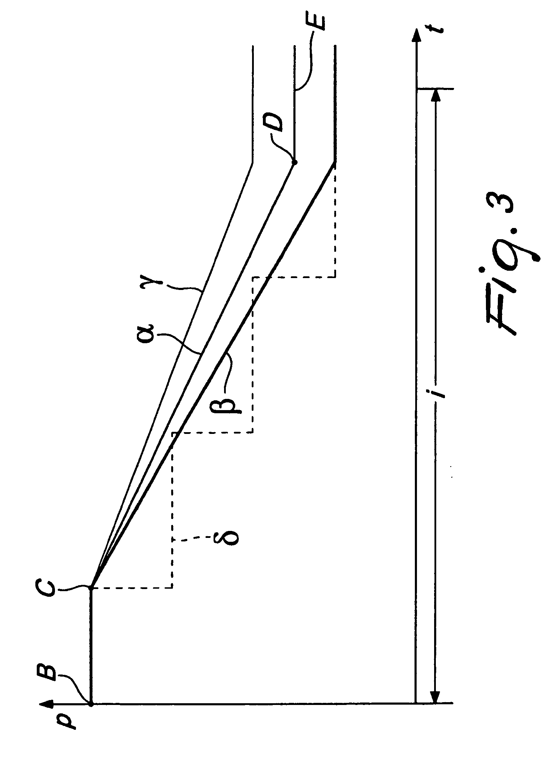

Control of the advancement of the bar pusher by the system according to the invention is described hereinafter based on the diagram in Figure 3 in which the thrust pressure (p) on the bar is shown against the advancement time (t). It is assumed that (i) is the hypothetical opening time of the collet 6, comprised within which is the time interval required to bring the bar 2 to strike against the stroke limiter 7 beginning from the instant in which the bar was released by the collet 6 of the lathe. During such interval (i), see Figure 3, there are substantially three distinct phases of the speed of advancement of the piece which succeed each other. In a first phase, the initial point of which is indicated with B, the advancement of the bar pusher is controlled by adjusting the flow-rate of the driving fluid by means of the device 25 and so establishing the flow-rate based on the length of the piece and therefore the speed of advancement of the bar.

The maximum pressure attained is read by the transducer 26, the value of which is proportional to the mass of the bar that is made to advance and of other resistance factors which brake the bar in the guide channel. The pressure value read by the transducer 26 is then sent to the processing element 24 which varies the pressure at the exit of the proportional valve 21 so that, in combination with the flow-rate valve 20, at point C, i.e. after a short period of the time interval (i), a braking is produced that has the trajectory (α). When the pressure has dropped to a determined value D before striking against the stroke limiter 7, its value is stabilised at values that ensure the advancement of the bar at a reduced speed, such as to cause, with the pressure E, an impact against the stroke limiter 7 of an extent that can be absorbed without resulting in mechanical and/or processing damage. Once the bar has completed its advancement stroke, the lathe controls activate the closing of the collet 6 of the lathe and begin the movement to remove the stroke limiter 7 in order to allow the tool 9 to begin processing of the piece. The above mentioned cycle thus returns to be repeated according to the methods described above.

The system described makes it possible to operate in succession on bars of different masses. In Figure 3 the trajectory indicated with (β) shows a situation in which the mass of the bar is less than that in the case described above (α) so as to allow the pressure to drop, in the same time interval C-D, to a lower level as would be expected for a lighter bar. Similarly, the trajectory indicated with (γ) shows the case of a bar that is lighter than the one in the case described above (α).

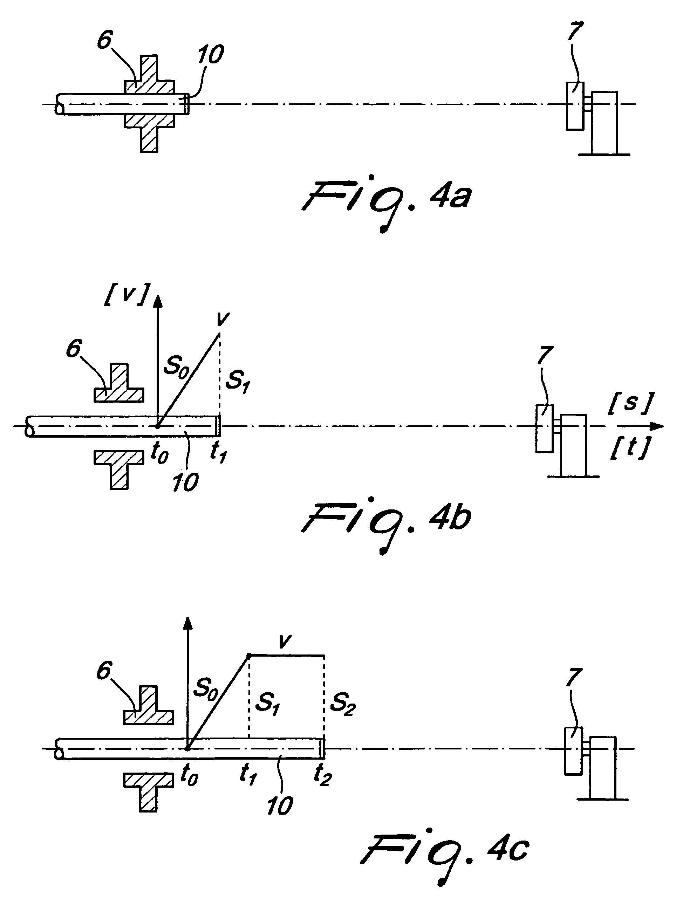

Solely for the purposes of clarification, in Figures 4a-4e the characteristics of the speed [v] of the bar is shown in its various phases in relation to the position the bar assumes in time [t] during the advancement stroke [s].

In Figure 4a the initial phase is shown in which the front portion 10 of the bar 2 is gripped in the collet 6 at a distance from the stroke limiter 7 of the lathe that is equal to the length of the piece to be processed.

In Figure 4b the phase after the opening of the collet and after the bar has travelled the section (s0-s1) in the short acceleration time (t0-t1) and has reached the speed (v) is shown. It should be noted that in the time (t0-t1) corresponding to the section (s0-s1), i.e. during the initial acceleration phase, the pressure transducer 26 reads the pressure value resulting from the thrust exercised by the driving fluid which is opposed by the inertial resistance of the bar.

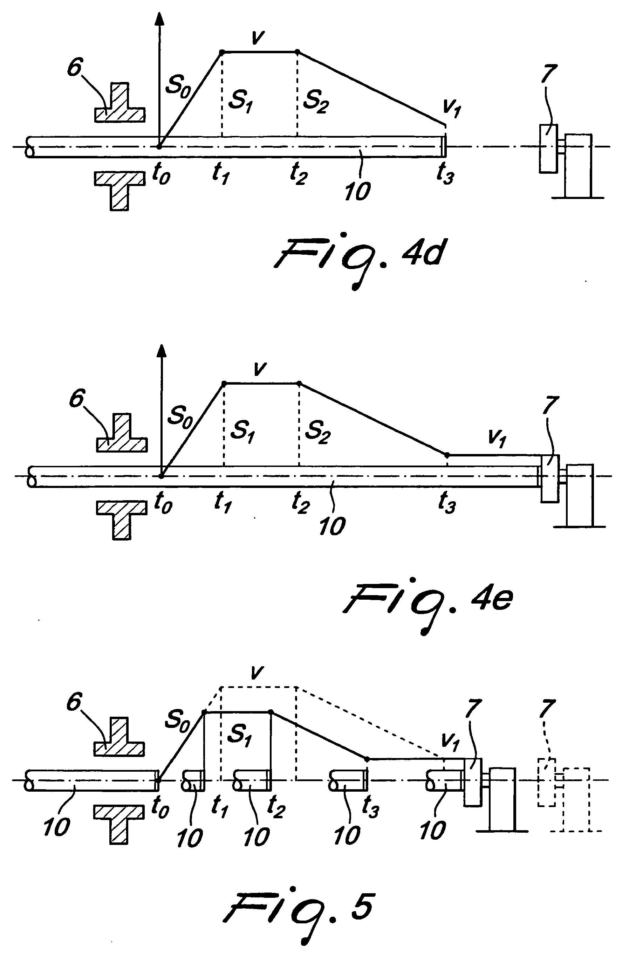

In Figure 4c the duration phase (t1-t2) is shown, in which the speed of the bar remains constant at the value (v) and then reduces in phase shown in Figure 4d, after the time (t2-t3) has elapsed, to the value (v1).

In phase shown in Figure 4d the value previously read by the transducer 26, fed back into the processing element 24 and in dynamic combination with the regulator 23, pilots the braking of the bar in order to reduce its speed along the section (t2-t3) to the value (v1) and keep this low speed constant until it comes up against the stroke limiter (phase shown in Figure 4e) resulting in an impact of an extent such that damage is not caused to the stroke limiter, nor does bouncing occur.

Figure 5 shows a situation in which it is assumed that the stroke limiter 7 is in a position that is closer to the collet 6 than in the previous Figures 4a-4e of which, for the purposes of comparison, the position of the stroke limiter and the characteristics of the speed are shown in dotted lines. Shortening the distance of the stroke limiter from the collet makes it possible to anticipate the arrest of the bar and therefore to obtain shorter pieces to be processed. To this end, to allow the arrest of the bar within the time for which the collet remains open, the transducer 26 is configured in such a way as to work ahead of the actuation of the valve 21, and hence the braking of the bar, and regulate its speed at values that allow a slow approach to the stroke limiter.

Naturally the system according to the invention is capable of adapting itself automatically to the variation (decrease) in mass to which the bar is gradually subjected as it is shortened as processing progresses. Indeed, the feedback makes it possible to modify the thrust necessary to accelerate the bar as its consumption increases.

In addition, the PLC 22 is capable of controlling the flow-rate of the driving liquid to the hydraulic motor according to the length of the piece to be processed so as to optimise the advancement time in line with the opening time of the collet 6 of the lathe. The flow-rate control can be achieved using on/off valves to select different preset speeds, for example according to the stepped characteristics (δ) of Figure 3 or by following the characteristics of a continuous function (parabola, hyperbola etc.).

In a further embodiment of the invention, instead of reading the maximum value of the pressure in the initial phase of advancement of the bar as configured in the transducer 26, it is possible to extend continuous monitoring of the pressure to the entire braking phase. With the same inventive concept it is possible to have regulation methods that keep the pressure stable and vary only the flow-rate, continuously, stepped, or by following other functions.

According to a further utilisation the invention can be used in rotating bar loaders and for feeding lathes with multiple spindles.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system for dynamic control of the bar pusher in a bar feeder for an automatic lathe (1), said feeder comprising a bar pusher (12) that is driven by a hydraulic motor (17) and can slide in a guide that is coaxial to the spindle (5) of the lathe, said spindle (5) being provided with a collet (6) for clamping the bar (2), in front of which collet (6) it is possible to position, at an adjustable distance according to the length of the part to be machined, a stroke limiter (7), said hydraulic motor (17) being controlled by a first valve element (21) for adjusting the pressure of the driving liquid and by a second valve element (20), separate from said first valve element (21), for adjusting the flow-rate of the driving liquid, said valve elements (20, 21) being controlled by a programmable logic unit (22), which comprises respectively a processing element (24) for driving said first valve element (21) and adjusting the pressure of the driving liquid according to a preset behaviour and a regulator (23) for driving said second valve element (20), there being also a transducer (26) for the pressure of said hydraulic motor (17) which is connected in feedback to said processing element (24), said processing element (24) and said regulator (23) being controlled by means (25) that are adapted to set the flow-rate of the driving liquid as a function of the length of the part to be machined.

2. The system according to claim 1, **characterized in that** said valve elements (20, 21) are driven by said processing element (24) and said regulator (23) so as to determine a constant flow-rate of the driving liquid and a pressure whose behaviour can be modified.

3. The system according to claim 1, **characterized in that** said processing element (24) is adapted to control said first regulator (23) so as to brake the bar according to a linear continuous behaviour.

4. The system according to claim 1, **characterized in that** said processing element (24) is adapted to control said first regulator (23) so as to brake the bar with a stepwise behaviour.

5. The system according to one of claims 1 to 4, **characterized in that** said valve element (21) is of the on/off type.

6. The system according to claim 1, **characterized in that** said valve elements (20, 21) are driven by said processing elements (24) and said regulator (23) so as to determine a constant pressure of the driving liquid and a variable flow-rate.

## Patentansprüche

1. System zum dynamischen Steuern eines Stangenschiebers in einem Stangenzuführer für eine automatische Drehbank (1), wobei der Zuführer einen Stangenschieber (12) aufweist, der von einem hydraulischen Motor (17) angetrieben ist und in einer Führung gleiten kann, die koaxial zu der Spindel (5) der Drehbank ist, wobei die Spindel (5) mit einem Spannfutter (6) zum Klemmen der Stange (2) ausgestattet ist, wobei es möglich ist vor dem Spannfutter (6), an einer einstellbaren Entfernung entsprechend zu der Länge des zu bearbeitenden Abschnitts, eine Hubbegrenzung (7) zu positionieren, wobei der hydraulische Motor (17) von einem ersten Ventilelement (21) zum Einstellen des Drucks der Antriebsflüssigkeit und von einem von dem ersten Ventilelement (21) separaten zweiten Ventilelement (20) zum Einstellen der Flussrate der Antriebsflüssigkeit gesteuert wird, wobei die Ventilelemente (20, 21) von einer programmierbaren Logikeinheit (22) gesteuert werden, welche respektive ein Verarbeitungselement (24) zum Antreiben des ersten Ventilelemente (21) und zum Einstellen des Drucks der Antriebsflüssigikeit entsprechend zu einem vorliegendem Verhalten und einen Regler (23) zum Antreiben des zweiten Ventilelements (20) aufweist, wobei dort ferner ein Wandler (26) für den Druck des hydraulischen Motors (17) ist, welcher in Rückkopplung mit dem Verarbeitungselement (24) verbunden ist, wobei das Verarbeitungselement (24) und der Regler (23) von Mitteln (25) gesteuert werden, die angepasst sind die Flussrate der Antriebsflüssigkeit als eine Funktion der Länge des zu bearbeitenden Abschnitts zu setzen.

2. System nach Anspruch 1, **dadurch gekennzeichnet, dass** die Ventilelemente (20, 21) von dem Verarbeitungselement (24) und dem Regler (23) angetrieben werden, um eine konstante Flussrate der Antriebsflüssigkeit und einen Druck, dessen Verhalten modifiziert werden kann, vorzugeben.

3. System nach Anspruch 1, **dadurch gekennzeichnet, dass** das Verarbeitungselement (24) angepasst ist den ersten Regler (23) zu steuern, um die Stange entsprechend einem linearen kontinuierlichen Verhalten zu bremsen.

4. System nach Anspruch 1, **dadurch gekennzeichnet, dass** das Verarbeitungselement (24) angepasst ist den ersten Regler (23) zu steuern, um die Stange mit einem schrittweisen Verhalten zu bremsen.

5. System nach einem der Ansprüche 1 bis 4, **dadurch gekennzeichnet, dass** das Ventilelement (21) von dem ein/aus-Typ ist.

6. System nach Anspruch 1, **dadurch gekennzeichnet, dass** die Ventilelemente (20, 21) von den Verarbeitungselementen (24) und dem Regler (23) angetrieben werden, um einen konstanten Druck der Antriebsflüssigkeit und eine variable Flussrate vorzugeben.

## Revendications

1. Système pour le contrôle dynamique de l'embarreur dans un dispositif d'alimentation de barres pour un tour automatique (1), ledit dispositif d'alimentation comprenant un embarreur (12) qui est entraîné par un moteur hydraulique (17) et peut coulisser dans un guide qui est coaxial à l'axe (5) du tour, ledit axe (5) étant prévu avec une pince (6) pour serrer la barre (2), en face de laquelle pince (6), il est possible de positionner, à une distance réglable selon la longueur de la pièce à usiner, un limiteur de course (7), ledit moteur hydraulique (17) étant contrôlé par un premier élément de soupape (21) pour ajuster la pression du liquide d'entraînement ou par un deuxième élément de soupape (20), séparé dudit premier élément de soupape (21), pour ajuster le débit du liquide d'entraînement, lesdits éléments de soupape (20, 21) étant commandés par une unité logique programmable (22) qui comprend respectivement un élément de traitement (24) pour entraîner ledit premier élément de soupape (21) et ajuster la pression du liquide d'entraînement selon un fonctionnement prédéterminé et un régulateur (23) pour entraîner ledit deuxième élément de soupape (20), on trouve également un transducteur (26) pour la pression dudit moteur hydraulique (17) qui est raccordé en rétroaction audit élément de traitement (24), ledit élément de traitement (24) et ledit régulateur (23) étant raccordés par des moyens (25) qui sont adaptés pour régler le débit du liquide d'entraînement en fonction de la longueur de la pièce à usiner.

2. Système selon la revendication 1, **caractérisé en ce que** lesdits éléments de soupape (20, 21) sont entraînés par ledit élément de traitement (24) et ledit régulateur (23) afin de déterminer un débit constant du liquide d'entraînement et une pression dont le fonctionnement peut être modifié.

3. Système selon la revendication 1, **caractérisé en ce que** ledit élément de traitement (24) est adapté pour contrôler ledit premier régulateur (23) afin de freiner la barre selon un fonctionnement continu linéaire.

4. Système selon la revendication 1, **caractérisé en ce que** ledit élément de traitement (24) est adapté pour contrôler ledit premier régulateur (23) afin de freiner la barre avec un fonctionnement par palier.

5. Système selon l'une quelconque des revendications 1 à 4, **caractérisé en ce que** ledit élément de soupape (21) est du type marche/arrêt.

6. Système selon la revendication 1, **caractérisé en ce que** lesdits éléments de soupape (20, 21) sont entraînés par lesdits éléments de traitement (24) et ledit régulateur (23) afin de déterminer une pression constante du liquide d'entraînement et un débit variable.
